# EUROPÄISCHE PATENTSCHRIFT

(11) **EP 0 845 837 B1**
(45) Veröffentlichungstag und Bekanntmachung des Hinweises auf die Patenterteilung: **31.01.2001**
(21) Anmeldenummer: 97120219.7
(22) Anmeldetag: 18.11.1997
(51) Int. Cl.: H01R 13/514, G06K 7/00

(54) **Stecker aus gestapelten Teilsteckern für Chipkarten**
Connector comprising stacked modules for chip cards
Connecteur comprennant modules empilés pour des cartes à puce

(30) Priorität: 29.11.1996 DE 19649599
(43) Veröffentlichungstag der Anmeldung: 03.06.1998
(73) Patentinhaber: TYCO Electronics Logistics AG, 9323 Steinach (CH)
(72) Erfinder: Schmidt, Helge, 67346 Speyer (DE); Ackermann, Gerhard, 68804 Altlussheim (DE)
(74) Vertreter: Klunker . Schmitt-Nilson . Hirsch

(56) Entgegenhaltungen:
- EP-A- 0 548 942
- DE-C- 4 435 122
- DE-C- 19 523 793
- US-A- 4 045 105

## Beschreibung

Die Erfindung betrifft einen Stecker, der aus mehreren flachen Teilsteckern besteht, die durch vertikales Aufeinanderstapeln der Teilstecker miteinander vereinigt werden, wobei die Kontur jedes Teilsteckers so ausgebildet ist, daß die Konturen eines unteren und eines oberen Steckers beim Aufeinanderstapeln formschlüssig verbindbar sind.

Ein derartiger Stecker ist beispielsweise aus der EP 0 548 942 B1 bekannt. Dort werden jedoch nur Verbinder mit kastenförmigen Teilverbindern beschrieben, die jeweils mehrere nebeneinander liegende, nur zu den Stirnseiten hin geöffnete Aufnahmekammern für mit Kabeln versehene Kontaktelemente aufweisen.

Mit zunehmender Speicherkapazität Ihrer IC's eröffnen sich für Speicherchipkarten ganz neue Anwendungsfelder. Beim Einsatz in elektronischen Systemen, insbesondere im Bereich der mobilen Telekommunikation (Handy) wird dabei die Kontaktierung einer variablen Anzahl dieser sogenannten Multimediakarten auf minimalem Einbauraum gefordert. Multimediaspeicherkarten sollen in Zukunft Funktionen als Datenträger für große Datenmengen, ähnlich wie bisher Diskette oder CD-ROM übernehmen. Im Hinblick auf Handys geht es deshalb beispielsweise nicht um die Speicherung von ca. 200 privaten Telefonnummern, wie sie schon bisher mittels der bekannten SIM-Karten möglich ist, sondern um austauschbare Karten, auf denen beispielsweise umfangreiche Softwareprogramme oder komplette Telefonbücher gespeichert sind.

Aufgabe der vorliegenden Erfindung ist die Schaffung einer räumlich möglichst kompakten Kontaktierungsmöglichkeit für eine variable Anzahl von Speicherkarten.

Diese Aufgabe wird bei einem Stecker der eingangs genannt Art dadurch gelöst,
- daß jeder Teilstecker an der Unterseite eine flache, rahmenartig ausgebildete und nach unten offene Kartenaufnahmekammer aufweist,
- in die eine kartenförmige Datenträgeranordnung, die einen integrierten Halbleiterschaltkreis und mehrere damit verbundene, auf einer ihrer Hauptflächen reihenartig nebeneinander liegende Kontaktflächen aufweist, so einsetzbar ist, daß die Kontaktflächen nach oben weisen und zur anschlußseitigen Stirnseite des Teilsteckers hin orientiert sind,
- und daß jeder Teilstecker in einer Reihe nebeneinander liegende Kontaktfedern aufweist, deren eine Enden als Steckeranschlüße ausgebildet sind, die aus der anschlußseitigen Stirnseite des Teilsteckers herausragen und deren zur gegenüberliegenden, zweiten Stirnseite hin orientierte, federnde Enden die Kontaktflächen einer eingesteckten Karte von oben her kontaktieren.

Vorteilhaft weist jeder Teilstecker an seiner zweiten Stirnseite eine Öffnung auf, in der ein Kantenabschnitt und die angrenzenden Bereiche der beiden Hauptflächen einer eingesetzten Karte freiliegen.

Weiterbildungen der Erfindungen sind Gegenstand der Unteransprüche.

Die Erfindung wird nachfolgend anhand von Ausführungsbeispielen im Zusammenhang mit den Figuren der Zeichnung erläutert. Es zeigt
- Figur 1: eine perspektivische Aufsicht schräg auf den erfindungsgemäßen Stecker,
- Figur 2: eine Aufsicht auf die Rückseite eines Teilsteckers des Stapels gemäß Figur 1,
- Figur 3: eine perspektivische Aufsicht von der Rückseite her auf den Stecker gemäß Figur 1,
- Figur 4: eine andere Ausführung des Steckers gemäß der Erfindung in gleicher Darstellung wie Figur 1.

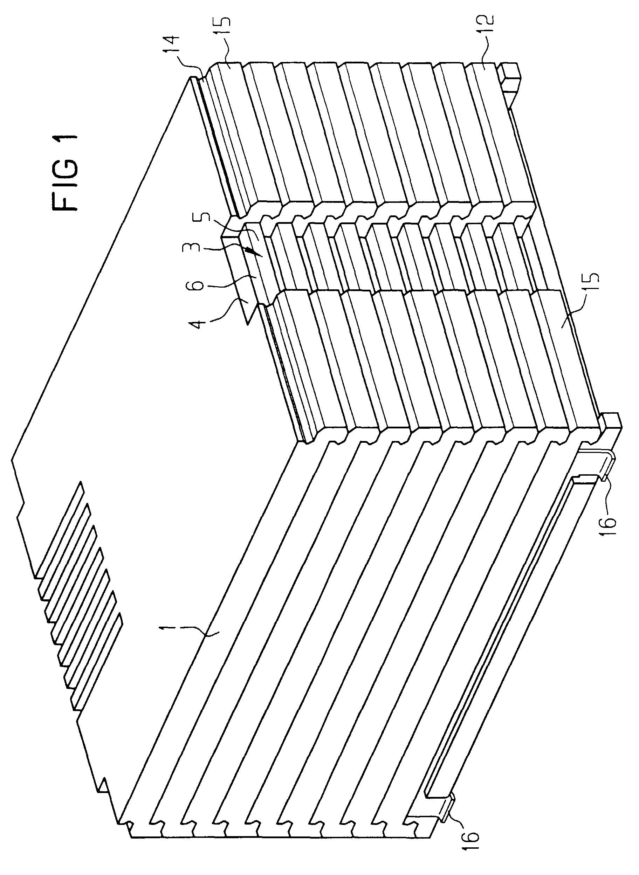

Der Stecker wird beispielsweise mittels der in Figur 1 erkennbaren Flansche 16 auf einem nicht dargestellten Systemträger befestigt. Dabei kann es sich insbesondere um eine Leiterplatte handeln oder auch um die Gehäusewand eines elektronischen Systems.

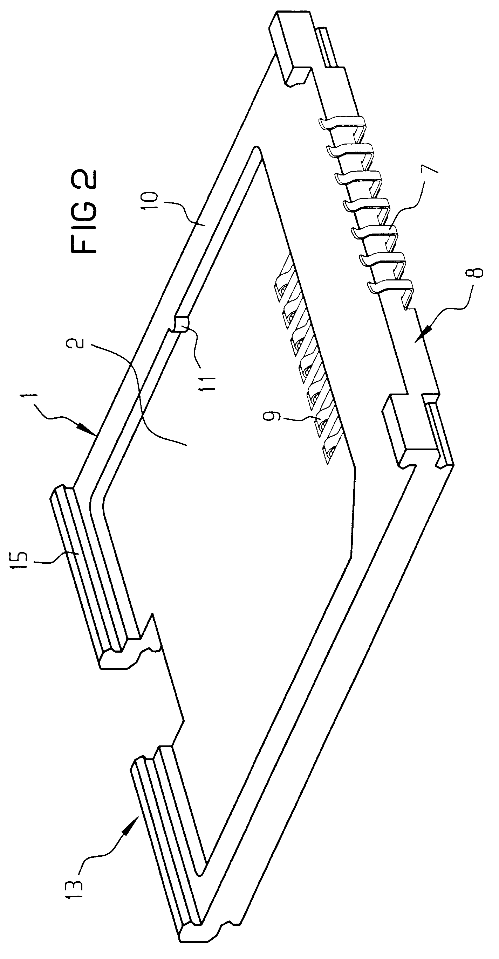

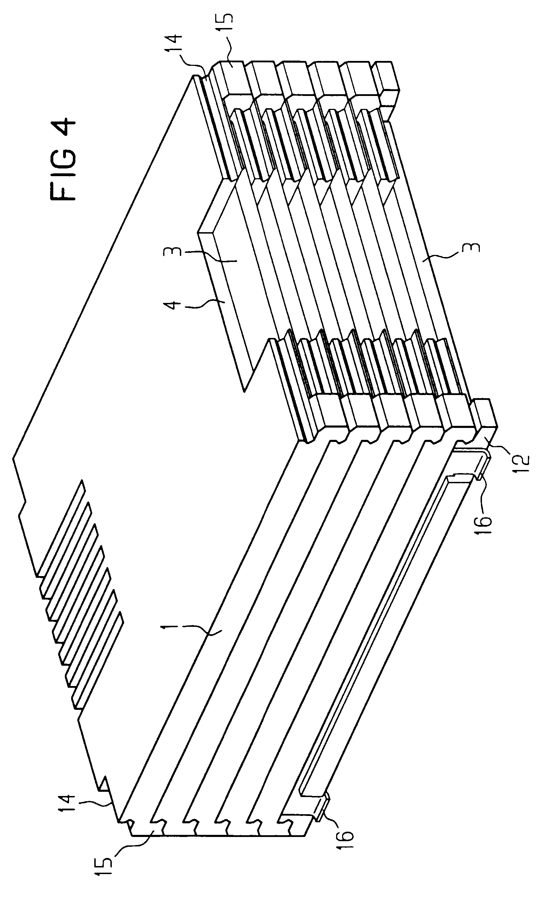

Das Basiselement 12 und die zu stapelnden Rastelemente, also die sonstigen Teilstecker 1, haben im Inneren bezüglich der einzusteckenden Karte 3 und bezüglich der Kontaktfedern alle den gleichen Aufbau, der aus Figur 2 hervorgeht. Der einzelne Teilstecker 1, 12 hat an der Unterseite eine Kartenaufnahmekammer 2, in die die Karte 3 eingesetzt wird. Zum leichteren Handling wir die Karte durch mindestens eine Andrücknase 11 in der Kartenaufnahmekammer 2 leicht festgeklemmt. An der zweiten Stirnseite 13 ist eine Sichtöffnung 4 für die Karte erkennbar. Zum Entfernen der Karte aus der Kartenaufnahmekammer muß in der Ausführung gemäß den Figuren 1 bis 3, wie in Figur 1 erkennbar, der frei zugreifbar offen liegende Kartenabschnitt 5 und 6 soweit angehoben werden, daß es zur Entrastung, das heißt zur Trennung des Stapels an dem betreffenden Platz kommt. Danach kann die Karte 3 aus der Kartenaufnahmekammer 2 entnommen werden. Bei der in Figur 4 dargestellten Variante ist bei geringfügig größerer Breite des Teilsteckers 1, 12 insgesamt das Stecken und Ziehen der Karten 3 möglich, ohne daß der Stapel getrennt werden muß. Dies wird weiter unten noch näher erläutert. Die Baulänge der Teilstecker 1, 12 kann bei dieser Variante im übrigen ohne funktionelle Einbußen deutlich verringert werden, so daß die Karten 3 an den zweiten Stirnseiten 13 deutlich überstehen können.

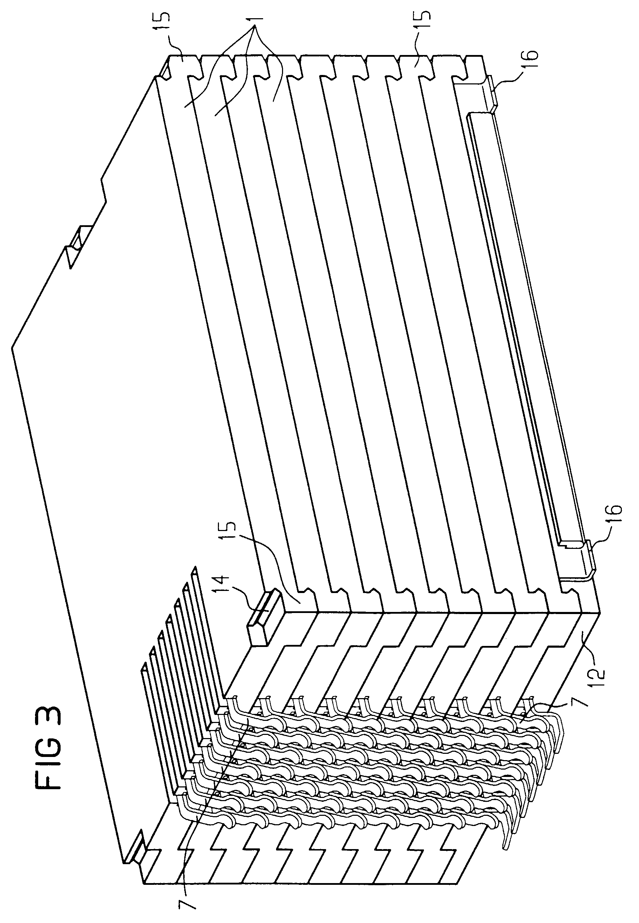

Das Verrasten der einzelnen Teilstecker 1, 12 im Stapel beruht, wie beispielsweise aus den Figuren 1 und 3 hervorgeht, im wesentlichen darauf, daß die Kontur der einzelnen Teilstecker 1, 12 so ausgebildet ist, daß ein mechanisch stabiles, selbst arretierendes Ineinandergreifen einer Teilfläche mit einer entsprechend als Negativ ausgebildeten Komplementärfläche eines angrenzenden Teilsteckers beispielsweise durch Auf- oder Einschnappen, durch Verschränken oder durch Ineinanderdrücken möglich ist. In den dargestellten Ausführungsbeispielen wird das federnde Verschnappen dadurch erreicht, daß alle Teilstecker 1, 12 im oberen Bereich jeder Stirnseite einen wenigstens über einen Teil der Breite der jeweiligen Stirnseite verlaufenden Verriegelungsabschnitt 14 aufweisen und daß alle Teilstecker 1 mit Ausnahme des Basiselements 12 im unteren Bereich jeder Stirnseite mindestens einen nach unten ragenden Rasthaken 15 aufweisen. Der Verriegelungsabschnitt 14 kann beispielsweise, wie dargestellt, als Vertiefung ausgeführt sein. Die Rasthaken 15 können dann, wie ebenfalls dargestellt, diese Vertiefungen klauenartig hintergreifen. Diese Gestaltung erlaubt eine theoretisch unbegrenzte Stapelgröße.

Die Variante gemäß Figur 4 beruht im einzelnen darauf, daß bei jedem Teilstecker 1, 12 die Rasthaken 15 an den Ecken der zweiten Stirnseite 13 angeordnet sind und daß der untere Bereich dieser Stirnseite 13 zwischen diesen beiden Rasthaken 15 auf einer Breite geöffnet ist, die groß genug ist, um das Stecken oder Ziehen einer Karte in einem betreffenden Teilstecker 1, 12 ohne Trennen der Verrastung des betreffenden Teilsteckers und des jeweils darunterliegenden Teilsteckers zu erlauben.

In Figur 3 ist erkennbar, daß die Steckeranschlüsse 7 aller Teilstecker 1 mit Ausnahme des Basiselements 12 so ausgeführt sind, daß sie die ihrem Reihenplatz entsprechenden Steckeranschlüsse 7 des im Stapel unmittelbar unter ihnen liegenden Teilsteckers 1 kontaktieren. Im übrigen umfaßt der Grundgedanke der vorliegenden Erfindung auch die Möglichkeit, daß die Steckeranschlüsse der Kontaktfedern nicht stirnseitig aus dem Teilstecker herausragen und demgemäß, wie bisher beschrieben, im Außenbereich des Steckers miteinander verbunden werden, sondern daß sie eine innen liegende Verbindung zwischen Ober- und Unterseite jedes Teilsteckers herstellen, wie dies analog in der Figur 4 und zugehöriger Beschreibung der DE 195 23 793 C1 gezeigt ist.

## Patentansprüche

1. Stecker, der aus mehreren flachen Teilsteckern besteht, die durch vertikales Aufeinanderstapeln der Teilstecker miteinander vereinigt werden, wobei die Kontur jedes Teilstekkers so ausgebildet ist, daß die Konturen eines unteren und eines oberen Teilsteckers beim Aufeinanderstapeln formschlüssig verbindbar sind,
**dadurch gekennzeichnet,**
- daß jeder Teilstecker (1, 12) an der Unterseite eine flache, rahmenartig ausgebildete und nach unten offene Kartenaufnahmekammer (2) aufweist,
- in die eine kartenförmige Datenträgeranordnung (3), die einen integrierten Halbleiterschaltkreis und mehrere damit verbundene, auf einer ihrer Hauptflächen in einer Reihe nebeneinander liegende Kontaktflächen aufweist, so einsetzbar ist, daß die Kontaktflächen nach oben weisen und zur anschlußseitigen Stirnseite (8) des Teilsteckers (1, 12) hin orientiert sind,
- und daß jeder Teilstecker (1, 12) in einer Reihe nebeneinander liegende Kontaktfedern aufweist, deren eine Enden als Steckeranschlüsse (7) ausgebildet sind, die aus der anschlußseitigen Stirnseite (8) des Teilsteckers (1, 12) herausragen und deren zur gegenüberliegenden, zweiten Stirnseite (13) hin orientierte, federnde Enden (9) die Kontaktflächen einer eingesteckten Karte (3) von oben her kontaktieren.

2. Stecker nach Anspruch 1,
**dadurch gekennzeichnet,**
- daß jeder Teilstecker (1, 12) an seiner zweiten Stirnseite (13) eine Öffnung (4) aufweist, in der ein Kantenabschnitt (5) und die angrenzenden Bereiche (6) der beiden Hauptflächen einer eingesetzten Karte (3) freiliegen.

3. Stecker nach Anspruch 1 oder 2,
**dadurch gekennzeichnet,**
daß am Rahmen (10) der Kartenaufnahmekammer (2) mindestens eine nach innen zur Karte (3) orientierte Andrücknase (11) vorgesehen ist.

4. Stecker nach einem der Ansprüche 1 bis 3,
**dadurch gekennzeichnet,**
daß als Basiselement (12) des Steckers ein auf einem Systemträger montierbarer und kontaktierbarer Teilstecker (12) vorgesehen ist, das alle Teilstecker (1, 12) im oberen Bereich jeder Stirnseite (8, 13) einen wenigstens über einen Teil der Breite der jeweiligen Stirnseite verlaufenden Verriegelungsabschnitt (14) aufweisen und daß alle Teilstecker (1) mit Ausnahme des Basiselements (12) im unteren Bereich jeder Stirnseite (8, 13) mindestens einen nach unten ragenden Rasthaken (15) aufweisen.

5. Stecker nach Anspruch 4,
**dadurch gekennzeichnet,**
daß bei jedem Teilstecker (1, 12) die Rasthaken (15) an den Ecken der zweiten Stirnseite (13) angeordnet sind und daß der untere Bereich dieser Stirnseite zwischen diesen beiden Rasthaken (15) auf einer Breite geöffnet ist, die groß genug ist, um das Stecken oder Ziehen einer Karte (3) in einem betreffenden Teilstecker ohne Trennen der Verrastung des betreffenden Teilsteckers und des jeweils darunterliegenden Teilstekkers zu erlauben.

6. Stecker nach einem der Ansprüche 1 bis 5,
**dadurch gekennzeichnet,**
daß die Steckeranschlüsse (7) aller Teilstecker (1) mit Ausnahme des Basiselements (12) so ausgeführt sind, daß sie die ihrem Reihenplatz entsprechenden Steckeranschlüsse (7) des im Stapel unmittelbar unter ihnen liegenden Teilsteckers (1) kontaktieren.

## Claims

1. Connector comprising a plurality of flat modules which are joined together by vertically stacking the modules on one another, wherein the contour of each module is designed in such a way that the contours of a bottom and top module can be connected with an interlocking fit during stacking on one another, characterised in that
each module (1, 12) has on its underside a flat card-receiving chamber (2) which is frame-like in design and open at the bottom,
into which a card-shaped data carrier arrangement (3), comprising an integrated semi-conductor circuit and a plurality of contact faces connected thereto and located adjacent to one another in a row on one of its main faces, can be inserted in such a way that the contact surfaces are directed upwards and are oriented in the direction of the connection-side end face (8) of the module (1, 12),
and in that each module (1, 12) comprises contact springs located adjacent to one another in a row, the ends of which being designed as connector terminals (7) at one end projecting from the connection-side end face (8) of the module (1, 12) and the resilient ends (9) of which oriented towards the opposite, second end face (13) contacting the contact surfaces from above of a card (3) which has been inserted.

2. Connector according to claim 1, characterised in that each module (1, 12) has, on its second end face (13), an aperture (4) in which an edge portion (5) and the adjacent regions (6) of the two main surfaces are exposed to a card (3) which has been inserted.

3. Connector according to claim 1 or 2, characterised in that at least one press-on lug (11) oriented inwards towards the card (3) is provided on the frame (10) of the card-receiving chamber (2).

4. Connector according to one of claims 1 to 3, characterised in that as base element (12) of the connector, a module (12) which can be assembled and contacted is provided on a system carrier and that all modules (1, 12) in the upper region of each end face (8, 13) comprise a locking portion (14) extending at least over a part of the width of the respective end face and in that all modules (1) with the exception of the base element (12) in the lower region of each end face (8, 13) comprise at least one latching hook (15) projecting downwards.

5. Connector according to claim 4, characterised in that with each module (1, 12), the latching hooks (15) are arranged at the corners of the second end face (13) and that the lower region of this end face is opened between these two latching hooks (15) to a width which is large enough to permit the insertion or withdrawal of a card (3) in a relevant module without separating the latching of the relevant module and of the module located therebelow in each case.

6. Connector according to one of claims 1 to 5, characterised in that the connector terminal (7) of all modules (1), with the exception of the base element (12), are designed in such a way that they contact the connector terminals (7) corresponding to their position in the row of the module (1) located in the stack directly beneath them.

## Revendications

1. Connecteur composé de plusieurs éléments de connecteur plats, reliés par empilage vertical des éléments de connecteur, le contour de chaque élément de connecteur étant conçu de sorte que les contours d'un élément de connecteur inférieur et d'un élément de connecteur supérieur peuvent être reliés de manière positive lors de l'empilage, caractérisé en ce que
chaque élément de connecteur (1, 12) comporte sur sa face inférieure une chambre de réception de carte en forme de cadre, plate et ouverte vers le bas (2),
dans laquelle peut être inséré un système de support de données en forme de carte (3), comportant un circuit intégré à semi-conducteurs et plusieurs surfaces de contact qui y sont reliées, agencées côte à côte dans une rangée sur l'une de ses surfaces principales, de sorte que les surfaces de contact sont dirigées vers le haut et orientées vers la face frontale de raccordement (8) de l'élément de connecteur (1, 12),
chaque élément de connecteur (1, 12) comporte des ressorts de contact juxtaposés dans une rangée, dont les extrémités forment des connecteurs à fiche (7), débordant de la face frontale de raccordement (8) de l'élément de connecteur (1, 12) et dont les extrémités élastiques (9) orientées vers la deuxième face frontale opposée (13) contactent d'en haut les surfaces de contact d'une carte insérée (3).

2. Connecteur selon la revendication 1, caractérisé en ce que chaque élément de connecteur (1, 12) comporte au niveau de sa deuxième face frontale (13) une ouverture (4), dans laquelle une section de bordure (5) et les zones adjacentes (6) des deux surfaces principales d'une carte insérée (3) sont dégagées.

3. Connecteur selon les revendications 1 ou 2, caractérisé en ce qu'au moins un nez de serrage (11) orienté vers l'intérieur vers la carte (3) est agencé sur le cadre (1) de la chambre de réception de la carte (2)

4. Connecteur selon l'une des revendications 1 à 3, caractérisé en ce que l'élément de base (12) du connecteur est constitué par un élément de connecteur (12) pouvant être monté sur un support de système et pouvant être contacté, en ce que tous les éléments de connecteur (1, 12) dans la zone supérieure de chaque face frontale (8, 13) comportent une section de verrouillage (14), s'étendant au moins sur une partie de la largeur de la face frontale correspondante et en ce que tous les éléments de connecteur (1), à l'exception de l'élément de base (12), comportent dans la zone inférieure de chaque face frontale (8, 13) au moins un crochet d'encliquetage (15) débordant vers le bas.

5. Connecteur selon la revendication 4, caractérisé en ce que chaque élément de connecteur (1, 12) comporte des crochets d'encliquetage (15) agencés au niveau des coins de la deuxième face frontale (13) et en ce que la zone inférieure de cette face frontale est ouverte entre ces deux crochets d'encliquetage (15) sur une largeur suffisamment grande pour permettre l'insertion ou la sortie d'une carte (3) dans un élément de connecteur correspondant sans séparation de l'encliquetage de l'élément de connecteur correspondant et de l'élément de connecteur agencé en-dessous.

6. Connecteur selon l'une des revendications 1 à 5, caractérisé en ce que les connecteurs à fiche (7) de tous les éléments de connecteur (1), à l'exception de l'élément de base ( 12), sont conçus de sorte à contacter les connecteurs à fiche (7) correspondant à leur emplacement dans la rangée de l'élément de connecteur (1) agencé immédiatement au-dessous dans la pile.
